# EUROPEAN PATENT APPLICATION

(11) **EP 0 818 723 A2**
(43) Date of publication of application: **14.01.1998**
(21) Application number: 97101635.7
(22) Date of filing: 03.02.1997
(51) Int. Cl.: G06F 1/00

(54) **Computer system with a copy-protecting function and recording medium for use with the same**

(30) Priority: 11.07.1996 JP 182236/96
(71) Applicant: KABUSHIKI KAISHA TOSHIBA, Kawasaki-shi, Kanagawa-ken 210 (JP)
(72) Inventor: Nakamura, Seiichi, 1-1 Shibaura 1-chome,Minato-ku Tokyo 105 (JP)
(74) Representative: Blumbach, Kramer & Partner

(57) **Abstract**

When a request for reading a file (131b) on a recording medium (131) has been issued, a file system (121a) of an operating system (121) collates the key information specified by a user program (131a) in the read request with the key information set in a file management table (131c) as attribute information for the file (131b) and determines whether to permit the reading of the file (131b) on the basis of the collation result. Therefore, although the file read request from a program (131a) in which the key information for the file (131b) registered in the file management table (131c) has been incorporated and which can issue the key information at the time of requesting file reading is permitted, none of the file read requests from the other programs are not accepted. This puts a limit on programs that can read files from software-distribution recording mediums, thereby enhancing software copy protection.

## Description

The present invention relates to a computer system with a computer software copy-protecting function and a recording medium for use with the system, and more particularly to a computer system with the copy protect function of preventing an unauthorized copy of computer software by means of a function provided in a file system of an operating system (OS) and to a recording medium for use with the computer system.

In personal computers and workstations, various copy protection techniques have been generally used to protect the rights of the writers or programmers of computer software. Copy protection is a technique for preventing an unauthorized copy of computer software.

In the past, copy protection was sometimes effected by the technique for partially changing the data storage format of a recording medium itself, such as a floppy disk, on which computer software has been recorded, or for causing a physical defect in a part of the recording area of the recording medium. This protection method, however, had the problem of sometimes causing the computer software stored in the recording medium to malfunction, so that it has been hardly used in recent years.

Therefore, the protection of computer software is now being achieved only in the form of file access control provided by the file management function of the operating system. In file access control, the attributes of files used in the computer system are divided into, for example, group common files and personal files. Then, the reading and writing of data from and into each file and the execution of each file are limited on the basis of the relationship between the user's IDs and file attributes. This enables a user with a specific ID to freely read and write the data from and into the files the user has created, but prevents the other users from accessing the files.

Hereinafter, the procedure for accessing a file by file access control will be explained.

The operating system usually offers such services as file open, file read, and file close. Making use of the file service function of the operating system, a user program can open a file and read the data from it. In this case, the file reading process is performed as follows.
(1) The user program requests the operating system to open a specific file.
(2) The operating system takes out a file management table that manages the file requested by the user program, according to the file open request from the user program.
(3) The operating system, using the taken-out file management table, checks to see if the user program can use the file (has the right to use the file), by comparing the user ID obtained from the user program with the user ID written in the file attribute information in the file management table.
(4) If the check result shows that the user program can use the file, the operating system will permit file open and return a file identifier to the user program. If the check result shows that the user program cannot use the file, the operating system will not permit file open and return a file open error notice.
(5) If being able to use the file, the user program will issue a file read request together with the file identifier to the operating system.
(6) The operating system reads the data in the file from the recording medium according to the user program's request.
(7) The operating system gives the read-out data to the user program.

In this way, whether the file reading request is permitted or not is determined in such a manner that the operating system identifies the user by the identifier called the user ID and compares the user ID with the readable user ID written in the permission information in the file management table.

Although such user ID-based file protection is effective in protecting the personal files in the environment where a plurality of users share a single computer, it cannot protect the computer software distributed to an unspecified number of users through recording mediums.

The reason is that when computer software has been distributed to an unspecified number of users, it is practically impossible to specify the user allowed to read the data by the user ID. For instance, since the computer software recorded on a CD-ROM or the like cannot specify which user ID should be used to determine which user to be permitted, there is no choice but to do setting so that the file can be used by any user ID. In this case, all users can read program files and data files from the CD-ROM or the like, so that an unauthorized copying is effected easily.

In recent years, large-capacity recording mediums, such as DVDs (Digital Video Discs or Digital Versatile Disc) have been developed. It has been considered that movies, animations, etc. are recorded on DVDs in computer software form and these DVDs are distributed to ordinary users. In this connection, new measures to prevent an unauthorized copy of computer software have been wanted.

The summarization of the problems in the prior art described above is as follows.

Although user ID-based file protection is effective in protecting the personal files in an environment where a plurality of users share a single computer, it has the problem of having difficulty in preventing an unauthorized copy of the computer software, when the computer software is distributed to an unspecified number of users through recording mediums.

Accordingly, an object of the present invention is to provide a computer system with the copy-protecting function of preventing users other than the proper user from making an unauthorized copy of distributed computer software and a recording medium for use with the system.

Another object of the present invention is to provide a computer system with the copy-protecting function of enabling only a specific user program to read distributed computer software and a recording medium for use with the system.

Still another object of the present invention is to provide a computer system with such a copy-protecting function as causes no inconvenience in using the computer software stored in a recording medium and a recording medium for use with the system.

According to a first aspect of the present invention, there is provided a computer system with a copy-protecting function comprising: a drive capable of driving a recording medium that stores a file and a file management table which has information related to the file and in which key information for identifying the file has been registered; and a memory that stores file control means for, in response to a file read request from a user program, collating the key information included in the request with the key information registered in the file management table in the recording medium and determining whether to permit the user program to read the file.

With the system, it is favorable that the file control means should be implemented by a file system of an operating system.

It is preferable that the file control means should include means for inhibiting any user program from reading the key information registered in the file management table.

It is desirable that the request from the user program should include a command for which a file name and the corresponding key information have been specified.

It is favorable that the recording medium has previously stored a user program having the same key information as that registered in the file management table. In this case, the user program stored on the recording medium may be loaded into the memory. Furthermore, the file management table may have information related to the user program. At this time, it is desirable that the file management table should have no key information for identifying the user program registered in it.

The key information that the user program stored on the recording medium has may be enciphered. In this case, it is favorable that the user program should include means for decoding the enciphered key information. The decoding means effects decoding in response to a specific user ID entered by the user.

The user program may include a program loader for loading a specific file on the recording medium into the memory. In this case, it is preferable that the specific file on the recording medium should be a program file.

According to a second aspect of the present invention, there is provided a recording medium for use with a computer system including a file control unit that can respond to a file read request from a user program and determine whether to permit the user program to read files, the recording medium storing: a file; a file management table which has information related to the file and in which key information for identifying the file has been registered, the key information being referred to by the file control unit so as to be collated with the key information included in the request; and a user program which has the same key information as that registered in the file management table and which can be loaded into the memory of the computer system so as to make a file read request to the file control unit.

With the recording medium, it is favorable that any user program should be unable to read the key information registered in the file management table.

The file management table may have information related to the user program. In this case, it is preferable that the file management table should have no key information for identifying the user program registered in it.

The key information that the user program stored on the recording medium has may be enciphered. In this case, it is desirable that the user program should include means for decoding the enciphered key information.

According to a third aspect of the present invention, there is provided a copy protection method applied to a computer system including a drive capable of driving a recording medium that stores a file and a file management table having information related to the file and a memory that stores a file system for responding to a file read request from a user program and determining whether to permit the user program to read the file, the method comprising the steps of: registering key information for identifying the file in the fine management table of the recording medium; storing in the recording medium a user program having the same key information as that registered in the file management table; loading the user program into the memory so that the user program stored in the recording medium can make a file read request to the file system; and collating the key information included in the request with the key information registered in the file management table in the recording medium when the user program loaded into the memory has made a file read request, and thereby determining whether to permit the reading of the file.

This invention can be more fully understood from the following detailed description when taken in conjunction with the accompanying drawings, in which:
FIG. 1 is a block diagram of the overall configuration of a computer system to which a copy-protecting function according to an embodiment of the present invention has been applied;
FIG. 2 is a block diagram of the main ones realizing the copy-protecting function of the component parts of the computer system of FIG. 1;
FIG. 3 shows the structure of the file management table stored in the recording medium in the DVD-ROM of FIG. 2;
FIG. 4 is a diagram to help explain the principle of copy protection realized by the component parts shown in FIG. 2;
FIG. 5 is a flowchart to help explain the processing procedure for file open request in copy protection realized by the component parts of FIG. 2;
FIG. 6 illustrates a first software structure stored on the recording medium in the DVD-ROM drive of FIG. 2;
FIG. 7 is a flowchart for the procedure for the decoding process of an enciphered key used in the software structure of FIG. 6;
FIG. 8 illustrates a second software structure stored on the recording medium in the DVD-ROM drive of FIG. 2; and
FIG. 9 is a flowchart for the procedure for the decoding process of an enciphered key used in the software structure of FIG. 8.

Hereinafter, referring to the accompanying drawings, an embodiment of the present invention will be explained.

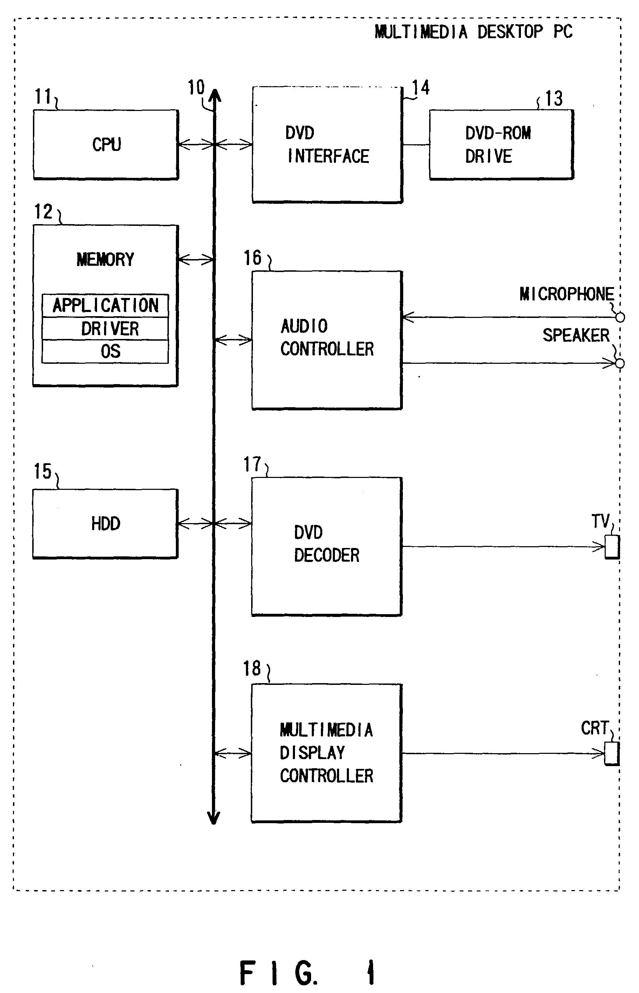

FIG. 1 shows the overall configuration of a computer system with a copy-protecting function according to an embodiment of the present invention. The computer system is, for example, a multimedia-compatible desktop personal computer and comprises a bus 10, a CPU 11, a main memory 12, a DVD-ROM drive 13, a DVD interface 14, an HDD 15, an audio controller 16, a DVD decoder 17, and a multimedia display controller 18.

The CPU 11 controls the operation of the entire system and executes the operating system and application programs to be executed that are stored in the memory 12. The transfer and reproduction of the data recorded on the DVD-ROM drive 13 are realized by causing the CPU 11 to execute a DVD control driver (not shown).

The memory 12 is used as a main memory, into which not only the operating system but also various types of application programs (including user programs) are loaded. In this case, the operating system is provided with a file system. The processing by the file system is one of the features of the present invention as described in detail later.

The DVD-ROM drive 13 is a device for reading the data from a recording medium (e.g., DVD-ROM). In the recording medium used in this case, not only various data files to be copy-protected but also program files and a file management table, both involving the features of the present invention, are stored as explained later.

The DVD interface 14 is a disk interface for connecting the disk devices, including the DVD-ROM drive 13 and HDD 15 to the bus 10 and performs data transfer with the DVD-ROM drive 13 under the control of the CPU 11. The DVD interface 14 is provided with a buffer for temporarily holding the data read from the DVD-ROM drive 13 and an I/O port (not shown) for reading the data in the buffer onto the bus 10.

The HDD 15 is a standard hard disk drive built in the computer and is used to store various types of data.

The audio controller 16 provides input/output control of sound data under the control of the CPU 11 and includes a PCM sound source, an FM sound source, a multiplexer, and a D/A converter (not shown), all these for sound output.

The DVD decoder 17 reads a moving-picture program stream from the DVD interface 16 under the control of the CPU 11 and separates it into video packets, sub-picture packets, and audio packets. Thereafter, the DVD decoder subjects each of them to a decoding process, synchronizes the resulting signals, and then outputs the synchronized signals.

The multimedia display controller 18 controls a CRT display used as a display monitor for the system under the control of the CPU 11 and supports not only the display of texts and graphics complying with the VGA specification but also the display of moving pictures.

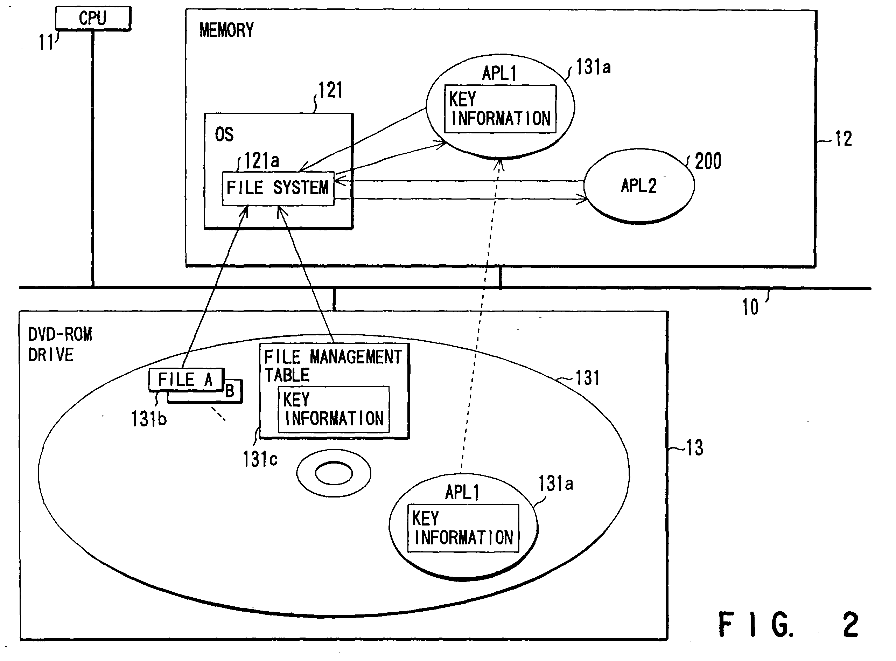

FIG. 2 shows the main ones realizing the copy-protecting function of the component parts of the computer system of FIG. 1. Specifically, to make it easy to understand the present invention, the component parts indirectly related to the present invention, including the DVD interface 14, are omitted. The main component parts include not only the bus 10, CPU 11, and memory 12, but also a DVD-ROM drive 13 acting as a mechanism for reading the computer software distributed through a recording medium as shown in the figure.

The CPU 11 controls the operation of the entire system as described earlier and executes an operating system 121 and various application programs (user programs) 131a, 200 loaded into the memory 12 used as the main memory of the system.

The operating system 121 loaded into the memory 12 provides the various programs to be executed on the computer with such functions as process management, memory management, and file management. The operating system 121 includes a file system 121a for performing control related to files.

The file system 121a is provided with the following functions to realize the copy protection of the embodiment.
(1) The file system inhibits all user programs from reading the key information (identification information for identifying the individual files that is used to realize the copy-protecting function of the embodiment) in the file management table explained later.
(2) The file system has a new open command as a system call, the new open command capable of notifying not only an ordinary file open command but also a file name and key information simultaneously to the operating system.

When the file open command is issued from the user program, the file system 121a performs the process of collating the key information specified by the user program with the key information on the file to be opened that has been registered in the file management table, and permits or forbids the file to be opened.

Furthermore, the operating system 121 has another function as a system call, the function of specifying a program name together with the key information in loading and executing a program file. When the load and execute command is issued from the user program, the operating system 121 collates the key information specified by the user program with the key information for the file to be opened that has been registered in the file management table and permits or forbids the program file to be loaded and executed.

A recording medium (e.g., DVD-ROM) 131 that can be read by the DVD-ROM drive 13 is used to distribute computer software. Recorded on the recording medium 131 of the embodiment are the program file 131a into which specific key information has been incorporated, various files 131b to be copy-protected, and the file management table 131c for managing the locations of all of the files recorded on the recording medium 131.

The program file 131a is an application program (user program) that is loaded into the memory 12 and executed on the operating system 121. The program file operates using the files 131b.

The program file 131a, when trying to read one of files 131b, issues a file open command to the operating system 121, specifying the name of the file to be read and the key information corresponding to the file.

The file management table 131c is used as a directory and manages the file names, file types (file extenders), file attributes, pointer information, file creation date and time information, file size information, etc. for each of the files on the recording medium 131.

Set in the file attributes are the information specifying a hidden file or a read-only file as information for performing file access control using a user ID, the information specifying a personal file or a group common file, and the information specifying information used to realize the copy protection of the embodiment is set.

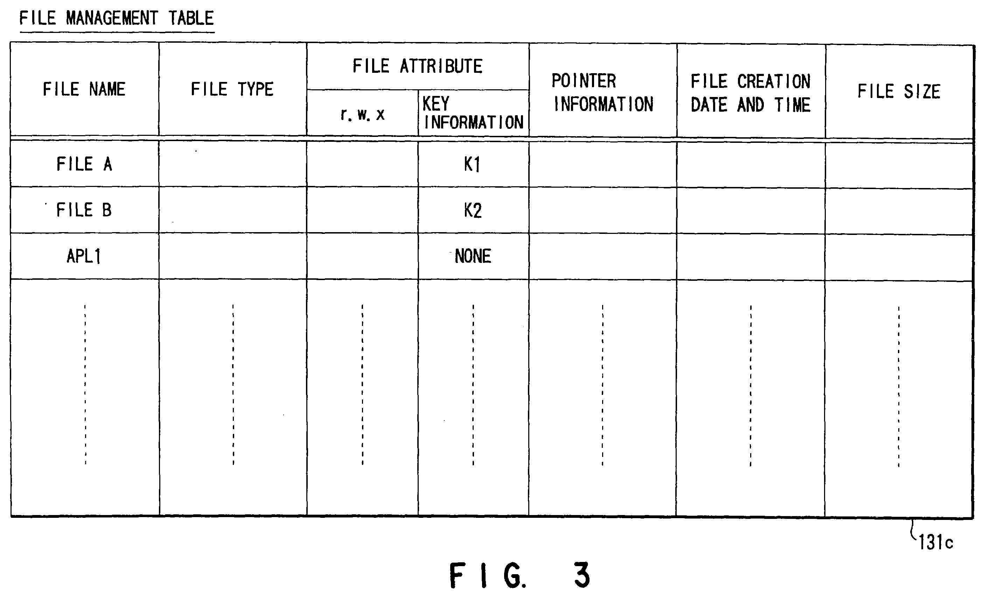

The key information is registered beforehand in file management table 131c, with respect to each of the files to be copy-protected. To copy-protect the files 131b as described earlier, specific pieces of key information (here, K1 and K2) are set with respect to file A and file B that constitute the file group 131b (see FIGS. 2 and 3). It should be noted that each piece of key information set in the file management table 131c cannot be known to any user program.

The pointer information in the file management table 131c is such information as a cluster number that indicates the start position on the recording medium 131 in which the body of the file has been stored.

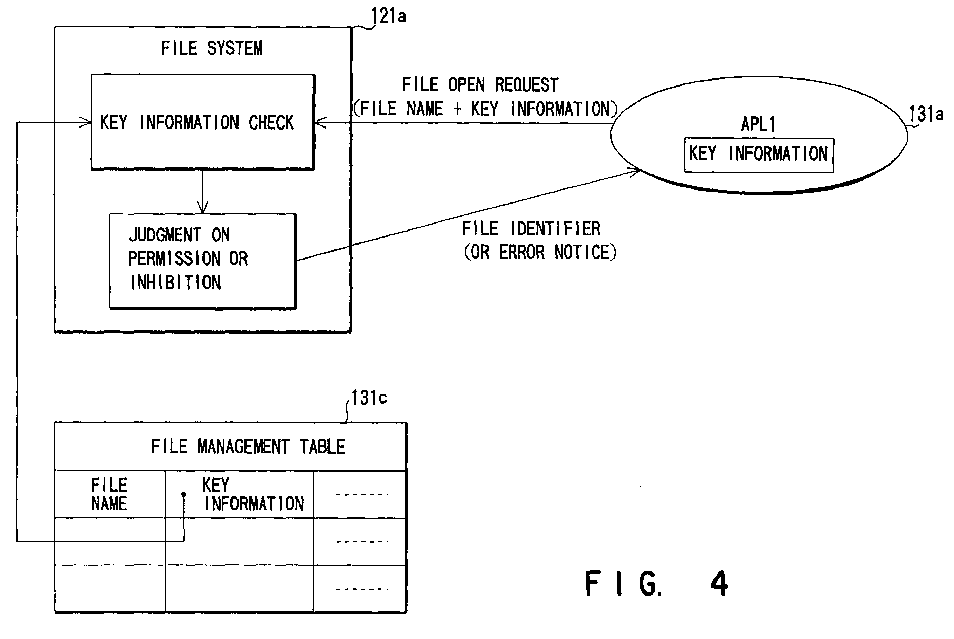

Next, the principle of copy protection using key information will be described by reference to FIG. 4. The reading of the files 131b to be copy-protected is effected according to the following procedure.
(1) When reading a specific file in the file group 131b, program 131a loaded from the recording medium 131 into the memory 12 and then executed issues a file open command to the file system 121a, specifying the name of the file to be read and the key information corresponding to the file.
(2) In response to the file open request, the file system 121a takes out the file management table 131c that manages the required file.
(3) Then, referring the taken-out file management table 131c, the file system 121a collates the key information for the specified file with the key information handed over from the program 131a and checks to see if the specified file is a file that the program 131a can read.
(4) If the former key information coincides with the latter key information, it will be determined that the specified file can be used. Then, the file system the latter key information, it will be determined that the specified file can be used. Then, the file system 121a will return the file identifier allocated to the specified file to the program 131a. If the former key information disagrees with the latter, it will be determined that the specified file cannot be used. Then, the file system 121a will return a file open error notice to the program 131a.
(5) If the file can be used, the program 131a will issue a file read request together with the file identifier to the file system 121a.
(6) The file system 121a reads the data in the file from the recording medium 131 according to the request of the program 131a.
(7) The file system 121a hands over the read-out data to the program 131a.

As described above, the embodiment is constructed so that a determination as to whether the file can be opened or not may be made on the basis of the key information collation result. Therefore, although the file read request from the program 131a is permitted into which the same key information as the key information for the relevant file registered in the file management table 131c is incorporated beforehand and which can issue the key information when requesting file reading, the file open request from a program without key information, such as program 200 of FIG. 2, is not accepted.

Therefore, it is possible to realize the copy-protecting function by means of such a configuration as causes no inconvenience in using software and prevent a user from making an unauthorized copy of the computer software distributed with the recording medium 131, such as a DVD.

By preparing such a key information collation function and file open permission/inhibition function in the file system 121a, the computer software that records data on the recording medium 131 has only to be provided with the file management table 131c in which the key information for the file to be protected has been registered and the program 131a having the key information for the file. This facilitates the development of computer software that realizes copy protection.

For the program files to be copy-protected, not only control of the permission/inhibition of a file open command described earlier but also control of the permission/inhibition of a load and execute commands to the program file may be performed using the key information in the same manner.

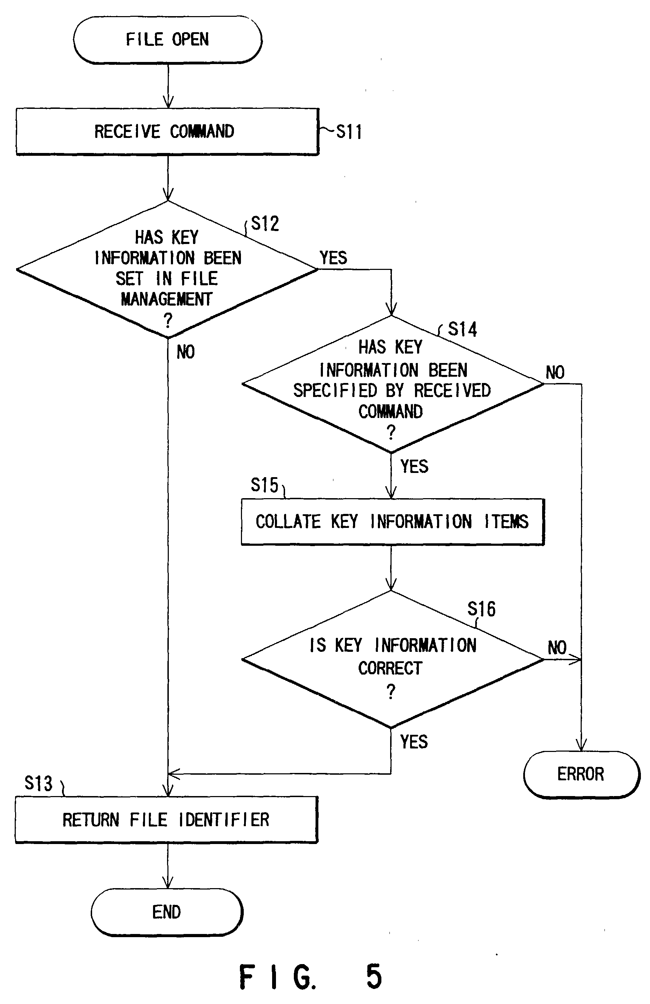

Next, the concrete procedure for executing the processes on the file system 121a in requesting file opening will be described by reference to the flowchart of FIG. 5.

The file system 121a, when receiving a file open command from a user program (step S11), first refers the relevant file attribute information in the file management table that manages the file specified by the file open command and determines whether or not the key information has been set (step S12). When the key information has not been set, an ordinary file open process will be executed and the file identifier will be returned to the user program (step S13). As a result, the aforementioned program 131a corresponding to file APL1 out of copy protection can be read from the recording medium 131 unconditionally.

When the key information has been set in the relevant attribute information in the file management table, the file system 121a checks to see if the key information has been specified by the file open command (step S14). If it has not been specified, it will be determined that a file open error has occurred at that time and a message to the effect that a file open error has occurred will be returned to the user program. When the key information has been specified, the file system 121a will collate the specified key information with the relevant key information in the file management table (step S16). If the specified key information coincides with the latter, an ordinary file open process will be executed and the file identifier will be returned to the user program (step S13). If the former disagrees with the latter, an error will result.

Next, explanation will be given of the computer software storage format needed when a software vendor or the like uses such copy protection to copy-protect a specific file.

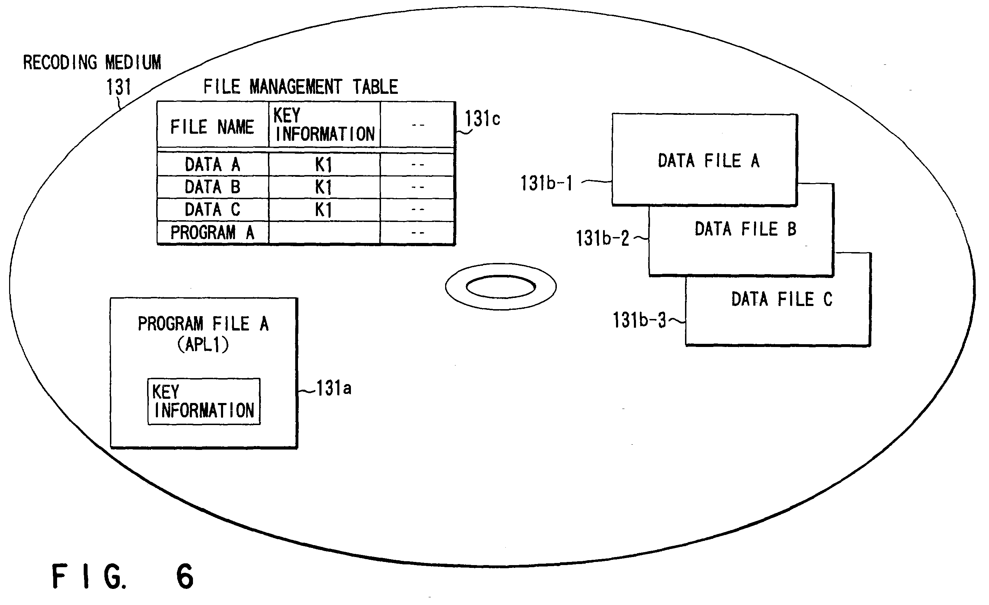

FIG. 6 illustrates a software structure needed to copy-protect the data files for providing the image information stored in a recording medium 131, such as a DVD.

On the recording medium 131, a program file 131a, data file groups 131b-1, 131b-2, 131b-3, and a file management table 131c are stored. The files that the user can refer to are the program file 131a and the file management table 131c except for the key information.

A software vendor who records software to be distributed on a recording medium 131 creates key information separately for each of data file (A) 131b-1, data file (B) 131b-2, and data file (C) 131b-3 or creates key information common to these data files and sets it as the attribute information for the relevant files in the file management table 131c. FIG. 6 shows a case where the key information common to data file (A) 131b-1, data file (B) 131b-2, and data file (C) 131b-3 are used.

Then, in the program file (A) 131a using these data files, the key information is written in each of the data files so that the key information corresponding to the file may be issued when the data file is opened. The key information for copy-protecting the program file (A) 131a is not set so that any program in the systern can read the program file.

Use of such a software structure facilitates the realization of the copy protection of the data files, which prevents unauthorized copying not expected by the software producer.

To prevent the key information from being stolen by inverse assembling the program file (A) 131a, the key information may be enciphered suitably and embedded in program file (A) 131a. In this case, when issuing a file open command, program file (A) 131a decodes the enciphered key information using the ID number entered by the user to use the software on the recording medium 131 and requests file open using the decoded key information. This prevents the key information from being stolen from the readable program file 131a. Since the function of the operating system inhibits the key information in the file management table 131c from being read, the key information will never be stolen from the file management table 131c.

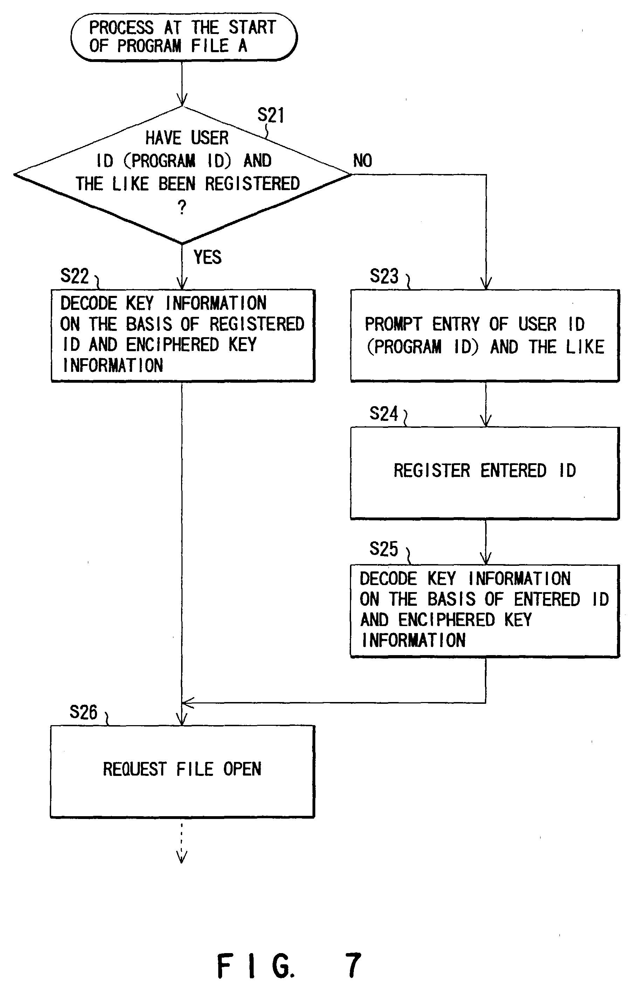

The flowchart of FIG. 7 shows the procedure of the key information decoding process executed by program file (A) 131a.

First, program file (A) 131a checks to see if the ID number (e.g., the program ID number or user ID number previously set for the recording medium 131) for using the software on the recording medium 131 has already been registered in the management data area that the operating system manages on an application program basis (step S21). If it has been registered, program file (A) 131a decodes the enciphered key information on the basis of the registered ID number and the enciphered key information corresponding to the file to be opened (step S22) and issues a file open command using the decoded key information (step S23).

If it has not been registered, program file (A) 131a will display a screen for prompting the user to enter the program ID and user ID and register the entered ID number in the aforementioned management data area (steps S23, S24). Thereafter, program file (A) 131a decodes the enciphered key information on the basis of the registered ID number and the enciphered key information corresponding to the file to be opened (Step S25) and issues a file open command using the decoded key information (step S26).

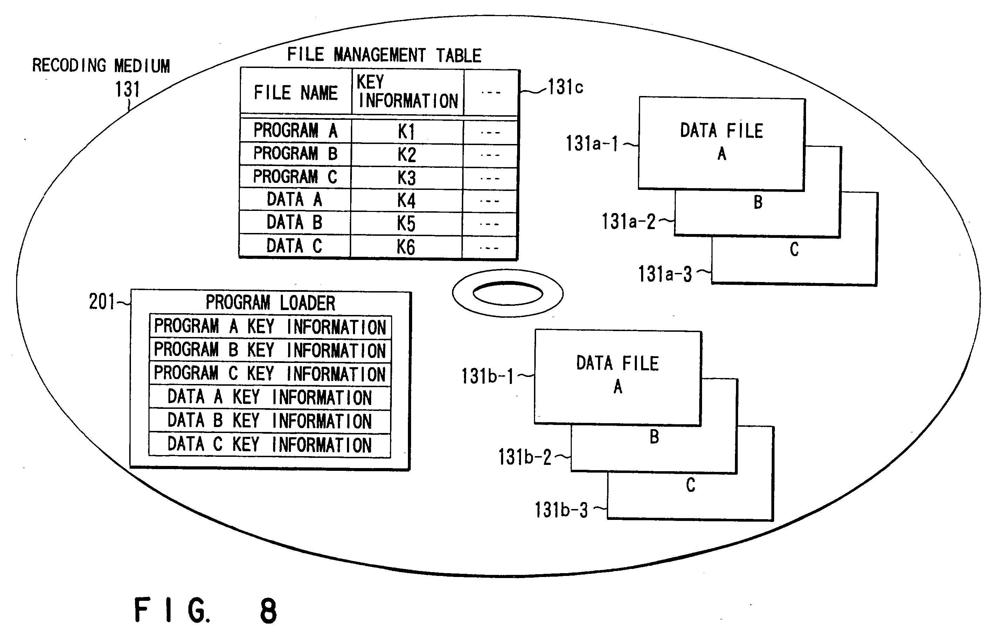

Next, the software structure needed to copy-protect not only the data files stored in the recording medium 131 but also the program files will be described by reference to FIG. 8.

A software vendor who records software on recording mediums 131 and distributes them creates key information separately for each of program file (A) 131a-1, program file (B) 131a-2, program file (C) 131a-3, data file (A) 131b-1, data file (B) 131b-2, and data file (C) 131b-3 or creates key information common to these data files and sets it as the attribute information for the relevant files in the file management table 131c. FIG. 8 shows a case where key information differs from file to file.

Then, not only these files to be copy-protected but also a small program (i.e., a program loader) 201 for reading program and data files is created. (There is a probability that the program loader 201 may be copied, but resulting in a minor problem even if it is copied.) In the program loader 201, a key information is written for each of the data files so that the key information may be issued to the operating system when the data file is required to be opened. Also in the program loader, the key information is written for each of the program files so that the key information may be issued to the operating system when the program file is required to be loaded into the memory and executed.

It should be noted that a key information for identifying the program loader 201 is not provided in the file management table 131c, in order to assure that any program in the system can read the loader 201.

In FIG. 8, the files that an unauthorized user can refer to are only the program loader 201 and the file management table 131c except for the key information. (That is, the unauthorized user cannot refer to the other files.)

When the unauthorized user executes the program loader 201, not only the key information stored in the program loader 201 but also the service of the operating system that executes the desired program may be retrieved and executed When the unauthorized user attempts to copy the data or program stored on the recording medium 131, however, the user can neither open nor execute the file because the user cannot know the key information, which thereby preventing unauthorized copying.

Furthermore, to prevent the key information from being stolen by inverse assembling the program loader, the key information may be enciphered suitably and embedded in the program loader 201. In this case, when issuing a file open command or a program load or execute command, the program loader 201 decodes the enciphered key information using the ID number entered by the user to use the software on the recording medium 131 and requests the command using the decoded key information. This prevents the key information from being stolen from the readable program loader 201. Since the function of the operating system inhibits the key information in the file management table 131c from being read, the key information will never be stolen from the file management table 131c.

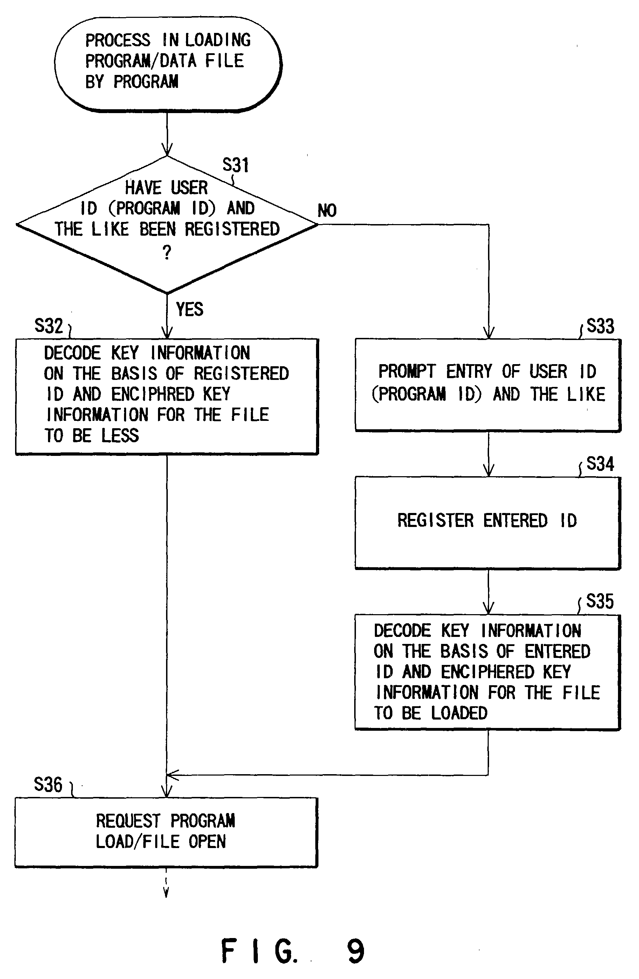

The flowchart of FIG. 9 shows the procedure of the key information decoding process executed by the program loader 201.

First, the program loader 201 checks to see if the ID number (e.g., the program ID number or user ID number previously set in the recording medium 131) for using the software on the recording medium 131 has already been registered in the management data area that the operating system manages on an application program basis (step S31). If it has been registered, the program loader 201 decodes the enciphered key information on the basis of the registered ID number and the enciphered key information corresponding to the file to be opened or loaded (step S32) and issues a file open command, load command, or execute command using the decoded key information.

If it has not been registered, the program loader 201 will display a screen for prompting the user to enter the program ID and user ID and register the entered ID number in the aforementioned management data area (steps S33, S34). Thereafter, the program loader 201 decodes the enciphered key information on the basis of the registered ID number and the enciphered key information corresponding to the file to be opened or loaded (step S35) and issues a file open command, load command, or execute command using the decoded key information (step S36).

As described above, in the embodiment, when a request for reading the file 131b on the recording medium 131 has been issued, the operating system 121 collates the key information specified by the user program in response to the read request with the key information set in the file management table 131c as the relevant file's attribute information, and determines on the basis of the collation result whether or not the file can be read.

Therefore, although the file read request from the program 131a is permitted in which the same key information as that for the relevant file registered in the file management table 131c is incorporated and which can issue the key information at the time of it is possible to prevent the user from making an unauthorized copy of the computer software recorded on the recording medium 131, such as a DVD, without causing inconvenience to authorized use of software.

Furthermore, since only the requests for loading and executing program files from the programs having the proper key information are accepted, an unauthorized copy of programs can be prevented reliably.

As described in detail so far, with the present invention, the operating system is caused to determine from the key check result whether or not a file can be read, which allows only a specific user program to read the distributed computer software, thereby preventing users other than the proper user from making an unauthorized copy of the computer software. Unlike a conventional equivalent, the copy protection system thus constructed puts the user to no trouble in using the computer software stored in the recording medium.

Additional advantages and modifications will readily occur to those skilled in the art. Therefore, the present invention in its broader aspects is not limited to the specific details, representative devices, and illustratd examples shown and described herein. Accordingly, various modifications may be made without departing from the spirit or scope of the general inventive concept as defined by the appended claims and their equivalents. For instance, while in the above embodiment, the case where the present invention is applied to a multimedia-compatible desktop personal computer has been explained, it may be applied to other types of computer system. Furthermore, while in the above embodiment, a DVD is used as a recording medium for distributing computer software, a CD-ROM or a floppy-disk may be used. Although in the above embodiment, the case where program 131a (FIG. 2) is loaded from the recording medium into the memory 12, it may be loaded from a recording medium other than the recording medium 131.

## Claims

1. A computer system with a copy-protecting function characterized by comprising:
a drive (13) capable of driving a recording medium (131) that stores a file (131b) and a file management table (131c) which has information related to the file (131b) and in which key information for identifying the file (131b) has been registered; and
a memory (12) that stores file control means (121a) for, in response to a file read request from a user program (131a, 200), collating the key information included in the request with the key information registered in the file management table (131c) in the recording medium (131) and determining whether to permit said user program (131a, 200) to read the file (131b).

2. A computer system according to claim 1, characterized in that said file control means (121a) is implemented by a file system (121a) of an operating system (121).

3. A computer system according to claim 1, characterized in that said file control means (121a) includes means for inhibiting any user program (131a, 200) from reading the key information registered in said file management table (131c).

4. A computer system according to claim 1, characterized in that the request from said user program (131a, 200) includes a command for which a file name and the corresponding key information have been specified.

5. A computer system according to claim 1, characterized in that said recording medium (131) has previously stored a user program (131a) having the same key information as that registered in said file management table (131c).

6. A computer system according to claim 5, characterized in that said user program (131a) stored on said recording medium (131) can be loaded into said memory (12).

7. A computer system according to claim 6, characterized in that said file management table (131c) has information related to said user program (131a).

8. A computer system according to claim 7, characterized in that said file management table (131c) has no key information for identifying said user program (131a) registered in it.

9. A computer system according to claim 6, characterized in that the key information that the user program (131a) stored on said recording medium (131) has is enciphered.

10. A computer system according to claim 9, characterized in that said user program (131a) includes means for decoding said enciphered key information.

11. A computer system according to claim 10, characterized in that said decoding means effects decoding in response to a specific user ID entered by the user.

12. A computer system according to claim 1, characterized in that said user program (131a) includes a program loader (201) for loading a specific file on said recording medium (131) into the memory (12).

13. A computer system according to claim 12, characterized in that said specific file on said recording medium (131) is a program file.

14. A recording medium for use with a computer system including a file control unit (121a) that can respond to a file read request from a user program (131a, 200) and determine whether to permit said user program (131a, 200) to read files, said recording medium characterized by storing:
a file (131a);
a file management table (131c) which has information related to the file (131b) and in which key information for identifying the file (131b) has been registered, the key information being referred to by said file control unit (121a) so as to be collated with the key information included in said request; and
a user program (131a) which has the same key information as that registered in said file management table (131c) and which can be loaded into the memory (12) of said computer system so as to make a file read request to said file control unit (121a).

15. A recording medium according to claim 14, characterized in that the key information registered in said file management table (131c) cannot be read by any user program (131a, 200).

16. A recording medium according to claim 14, characterized in that said file management table (131c) has information related to said user program (131a).

17. A recording medium according to claim 16, characterized in that said file management table (131c) has no key information for identifying said user program (131a) registered in it.

18. A recording medium according to claim 14, characterized in that the key information that the user program (131a) stored on said recording medium (131) has is enciphered.

19. A recording medium according to claim 18, characterized in that said user program (131a) includes means for decoding said enciphered key information.

20. A copy protection method applied to a computer system including a drive (13) capable of driving a recording medium (131) that stores a file (131b) and a file management table (131c) having information related to the file (131b) and a memory (12) that stores a file system (121a) for responding to a file read request from a user program (131a, 200) and determining whether to permit said user program (131a, 200) to read the file, said method characterized by comprising the steps of:
registering key information for identifying the file (131b) in the fine management table (131c) of said recording medium (131);
storing in said recording medium (131) a user program (131a) having the same key information as that registered in said file management table (131c);
loading the user program (131a) into said memory (12) so that said user program (131a) stored in said recording medium (131) can make a file read request to said file system (121a); and
collating the key information included in the request with the key information registered in the file management table (131c) in said recording medium (131) when said user program (131a) loaded into said memory (12) has made a file read request, and thereby determining whether to permit the reading of the file (131b).
